# EUROPEAN PATENT APPLICATION

(11) **EP 1 686 417 A1**
(43) Date of publication of application: **02.08.2006**
(21) Application number: 04746723.8
(22) Date of filing: 24.06.2004
(51) Int. Cl.: G03B 17/38, H04N 5/232, H04M 1/00, H04N 101/00

(54) **CAMERA-EQUIPPED MOBILE TELEPHONE**

(30) Priority: 20.11.2003 JP 2003390832
(71) Applicant: MITSUBISHI DENKI KABUSHIKI KAISHA, Chiyoda-ku, Tokyo 100-8310 (JP)
(72) Inventor: KOJIMA, Keiko, Mitsubishi Denki Kabushiki Kaisha, Tokyo 100-8310 (JP)
(74) Representative: Popp, Eugen
(86) International application number: PCT/JP2004/009254
(87) International publication number: WO 2005/050308

(57) **Abstract**

A mobile telephone with a camera (9), a shutter of a camera (9) of which can be remote controlled without using any device other than the mobile telephone body is obtained, and the mobile telephone with a camera includes a camera control unit (13), a voice recognition unit (10) for recognizing voice from a transmitter (8), a preliminarily registered voice sample (11), a voice comparison unit (12) for comparing an output of the voice recognition unit (10) with one of the preliminarily registered voice samples in the voice sample (11), wherein, when the mobile telephone with the camera is in a camera mode, the voice comparison unit (12) detects a coincidence of the output of the voice recognition unit (10) and the voice sample (11) and outputs a signal for operating a shutter of a camera (9) to the camera control unit (13).

## Description

### Technical Field

The present invention relates to a mobile telephone with a camera, which can be remote-controlled.

### Background Art

In recent years, various functions were added to a mobile telephone and, particularly, a mobile telephone with a camera, a shutter of which can be remote-controlled, has been proposed. A mobile telephone with a camera disclosed in JP-A-2002-50999 uses a dedicated remote control device. The remote control device and the mobile telephone with the camera are connected each other by radio communication, infrared ray communication or a cable communication and the camera is remote controlled by transmitting a remote control signal to the mobile telephone.

A mobile telephone with a camera disclosed in JP-A-2003-18254 operates a shutter of the camera automatically based on an incoming signal when the mobile telephone with the camera is in camera mode and receives the incoming signal.

However, these mobile telephones require devices for remote controlling the cameras individually. That is, even if the mobile telephone with the camera disclosed in JP-A-2002-50999 has a function, which is coordinated with the remote control, it is impossible to use the function unless a shooter has a remote control device on hand when the shooter wants to shoot. Further, when a subject to be shot performs a remote controlled shooting by utilizing this function by himself, the remote controller for operating the camera may be taken in an image shot. In JP-A-2003-18254, another mobile telephone is necessary in addition to the mobile telephone with the camera. Also, in a case where a picture is taken while holding the camera on hands, camera shake is easily caused when a shutter is pressed.

### Disclosure of the Invention

The present invention was made in order to solve the problems and an object of the present invention is to provide a mobile telephone with a camera, which is capable of remote controlling a shutter of the camera of the mobile telephone without using any device other than the mobile telephone set.

In order to achieve this object, in the present invention, a mobile telephone with a camera is constructed such that a shutter of the camera of the mobile telephone with the camera is automatically operated when the mobile telephone with the camera is in a camera mode and recognizes a preliminarily registered voice.

A mobile telephone with a camera may include a camera control unit, a voice recognition unit for recognizing voice from a transmitter, a preliminarily registered voice sample, and a voice comparison unit for comparing an output of the voice recognition unit with one of preliminarily registered voice samples in the preliminarily registered voice sample, wherein, when the mobile telephone with the camera is in a camera mode, the voice comparison unit detects a coincidence of the output of the voice recognition unit and the voice sample and outputs a signal for operating a shutter of the camera to the camera control unit.

In the mobile telephone with the camera of the invention, a shutter of the camera may be automatically operated when the mobile telephone with the camera is in a camera mode and recognizes a preliminarily registered pose of a subject through the camera.

A mobile telephone with a camera may include a camera control unit, an image recognition unit for recognizing an image to be shot by the camera, a preliminarily registered image sample, and an image comparison unit for comparing an output of the image recognition unit with one of preliminarily registered image samples in the preliminarily registered image sample, wherein, when the mobile telephone with the camera is in a camera mode, the image comparison unit detects a coincidence of the output of the image recognition unit and the image sample and outputs a signal for operating a shutter of the camera to the camera control unit.

In the mobile telephone with the camera, a shutter of the camera may be automatically operated when the mobile telephone with the camera is in a camera mode and recognizes a preliminarily registered movement of a subject through the camera.

A mobile telephone with a camera may include a camera control unit, an image recognition unit for recognizing an image to be shot by the camera, a preliminarily registered image sample, and an image comparison unit for comparing an output of the image recognition unit with continuous two or more image samples of preliminarily registered image samples in the preliminarily registered image sample, wherein, when the mobile telephone with the camera is in a camera mode, the image comparison unit detects a coincidence of the output of the image recognition unit and the continuous image samples and outputs a signal for operating a shutter of the camera to the camera control unit.

### Brief Description of the Drawings

Fig. 1 is a block diagram showing a construction of a mobile telephone with camera according to the embodiment 1 of the present invention.
Fig. 2 is a block diagram showing a construction of a mobile telephone with camera according to the embodiments 2 and 3.
Fig. 3 is a flowchart showing a main operation of the embodiment 1.
Fig. 4 is a flowchart showing a main operation of the embodiment 2.
Fig. 5 is a flowchart showing a main operation of the mobile telephone with the camera according to the embodiment 3 of the present invention.

### Advantage of the Invention

In the camera mode, the mobile telephone with the camera according to the present invention is capable of operating the shutter of the camera by recognizing a specific voice or image. Therefore, there is no need of newly providing a dedicated remote control device in the mobile telephone and it is possible to improve the operability of the camera function in remote-controlling the camera. Further, when a subject to be shot and a shooter are identical, it is possible to shoot only the subject without taking such remote control device in an image of the subject.

### Best Mode for Carrying Out the Invention

### Embodiment 1

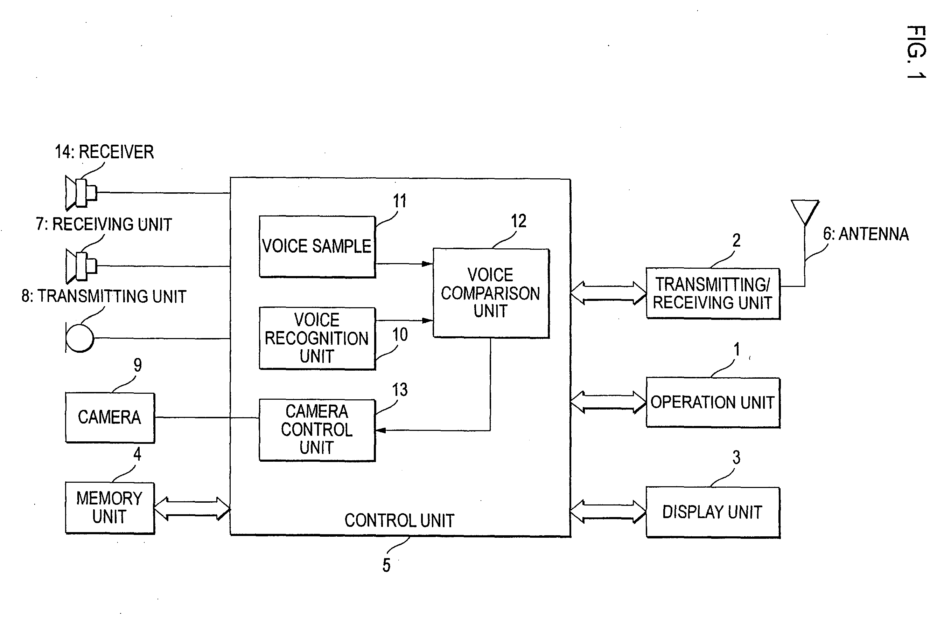

Now, the present invention will be described with reference to the drawings. Fig. 1 is a block diagram showing a construction of a mobile telephone with a camera according to the embodiment 1 of the present invention. As shown in Fig. 1, the mobile telephone with the camera of the present invention includes an operation unit 1 such as ten keys and function keys, which are included in a conventional mobile telephone, a transmitting/receiving unit 2 for performing a communication control on the basis of operations in the operation unit 1, a display unit 3, a memory unit 4 and a control unit 5 for controlling the units 1 to 4, so that a usual communication, data transmission of such as e-mail and storage of telephone numbers of other parties are possible. An antenna 6 is connected to the transmitting/receiving unit 2 and a receiver unit 7 and a transmitter 8 are connected to the control unit 5. In communication, the receiver unit 7 outputs voice, while the transmitter unit 8 inputs voice.

The camera 9 is connected to the control portion 5 and by performing predetermined operations in the operation unit 1, the mobile telephone with the camera according to this embodiment is set in a camera mode, in which a shooting by the camera 9 becomes possible. In the camera mode, an image on the camera 9 is always displayed on the display unit 3. By operating predetermined keys of the operation unit 1 in the camera mode, a shutter control of the camera 9 becomes possible. When a shooting is performed, an image thus shot is displayed on the display unit 3. The image can be stored in the memory unit 4 by operating a predetermined key in the operation unit 1. Further, a receiver 14, which performs an operation to be described later, is connected to the control unit 5.

The control unit 5 includes a voice recognition unit 10, a voice sample 11, a voice comparison unit 12 and a camera control unit 13. The voice recognition unit 10 recognizes and confirms a voice input from the transmitter unit 8. The voice comparison unit 12 compares preliminarily registered voices in the voice sample 11 with the voice recognized by the voice recognition unit 10 and outputs a signal to the camera control unit 13 according to a result of the comparison.

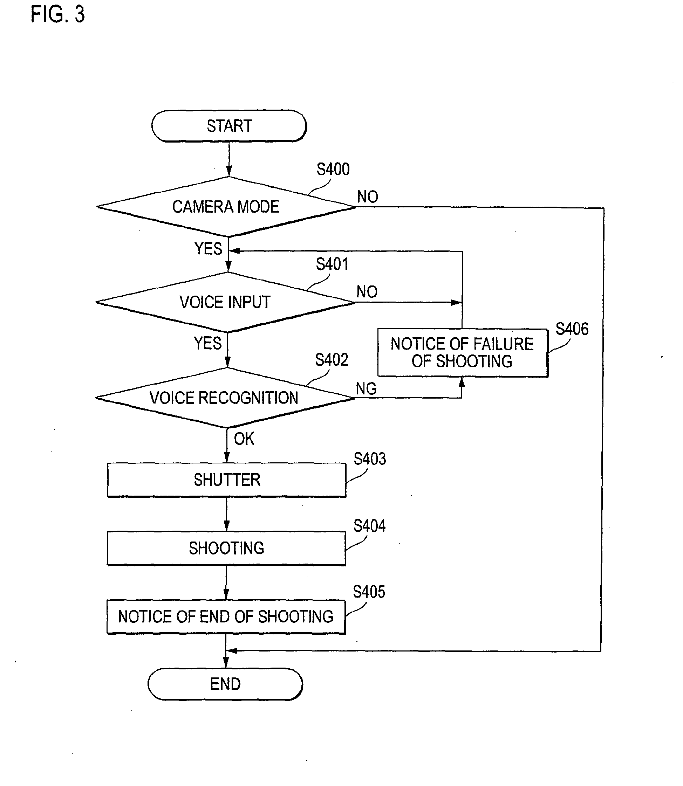

Now, a method for remote controlling the camera 9 of the mobile telephone with the camera according to the embodiment 1 will be described with reference to the construction shown in Fig. 1 and a flowchart shown in Fig. 3. First, when the mobile telephone is in a camera mode (S400: YES) and the voice recognition unit 10 confirms a voice input from the transmitter unit 8 (S401: YES), it is confirmed by the voice comparison unit 12 whether or not the recognized voice is coincident with the voice preliminarily registered in the voice sample 11. When it is confirmed that they are coincident (S402: OK), the shutter of the camera 9 is operated by the camera control unit 13 (S403) and a shooting is performed (S404). Considering the fact that a natural shooting is possible when there are several seconds from a time when the shooter (subject to be shot) produces voice to a time when the shutter is released, a time setting function may be given to the camera control unit 13. When volume of voice of the shooter is short and the voice input can not be recognized (S401: NO), it is possible to input voice again. In this embodiment, in order to make the transmitter unit 8 possible to input voice from a remote position, sensitivity of a microphone in the camera mode is increased compared with that in a usual communication.

When the shooting is over, the shooter is notified of the end of the shooting by a sound effect generated in the receiver 14 (S405) or the like. An image shot is displayed on the display unit 3 and the shooter can store the displayed image in the memory unit 4 by operating a predetermined key of the operation unit 1. When the voice comparison unit 12 decides that the input voice and the voice sample 11 are not coincident (S402: NG), the shooter is notified of failure of the shooting by a sound effect, which is different from the sound effect for the end of shooting, generated in the receiver 14 (S406) or the like and the voice comparison unit 12 waits for a voice input again. The voice, which is the shooting condition, can be arbitrarily selected from preliminarily registered voice samples in the preliminarily registered voice sample 11 by a user. Further, the user can newly register a voice input for about 3 seconds from the transmitter unit 8 in the voice sample 11 as a voice sample by operating a predetermined key of the operation unit 1.

Incidentally, though, in the embodiment 1, the shutter of the camera is remote controlled by using voice, it is possible for the shooter having the camera in his hand to similarly control the shutter by using voice. In such case, since it is possible to operate the shutter by not pressing a shutter button but holding the camera in a stationary state, there is an advantage that camera shake can be prevented.

Further, it may be adapted to switch the remote control and the control with the camera being held by the shooter. In such case, it is possible to prevent malfunction by switching two transmitter units or switching the directivity of the transmitter unit such that voice in the shooting direction of the camera is inputted in the remote control and voice in a finder direction of the camera is inputted in the control with the camera being held by the shooter's hand.

### Embodiment 2

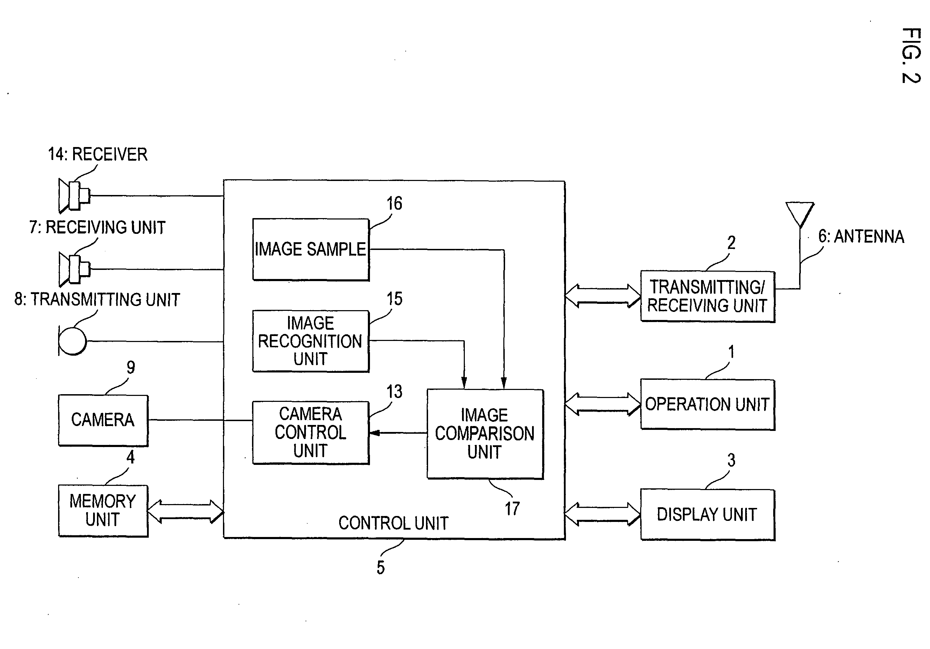

Fig. 2 is a block diagram showing a construction of a mobile telephone with a camera according to the embodiment 2 of the present invention. The mobile telephone with the camera according to the embodiment 2 includes an operation unit 1 such as ten keys and function keys, a transmitting/receiving unit 2 for performing a communication control on the basis of operations in the operation unit 1, a display unit 3, a memory unit 4 and a control unit 5 for controlling the units 1 to 4 similarly to the mobile telephone with camera shown in Fig. 1, so that a usual communication, a data transmission of such as e-mail and a storage of telephone numbers of other parties, etc., are possible. An antenna 6 is connected to the transmitting/receiving unit 2 and a receiver unit 7 and a transmitter 8 are connected to the control unit 5.

A camera 9 is connected to the control portion 5 and by performing predetermined operations in the operation unit 1, the mobile telephone with the camera according to this embodiment is set in a camera mode, in which a shooting by the camera 9 becomes possible. In the camera mode, an image on the camera 9 is always displayed on the display unit 3. By further operating predetermined keys of the operation unit 1 in the camera mode, a shutter control of the camera 9 becomes possible. When a shooting is performed, an image thus shot is displayed on the display unit 3. The displayed image can be stored in the memory unit 4 by operating a predetermined key in the operation unit 1. Further, a receiver 14, which performs an operation to be described later, is connected to the control unit 5.

The control unit 5 includes a camera control unit 13 connected to the camera 9, an image sample 16 and an image comparison unit 17. An image recognition unit 15 extracts an image contour of an image input from the camera 9. The image comparison unit 17 compares an image preliminarily registered in the image sample 16 with a pose of an image recognized by the image recognition unit 15 and supplies a signal to the camera control unit 13 according to a result of the comparison.

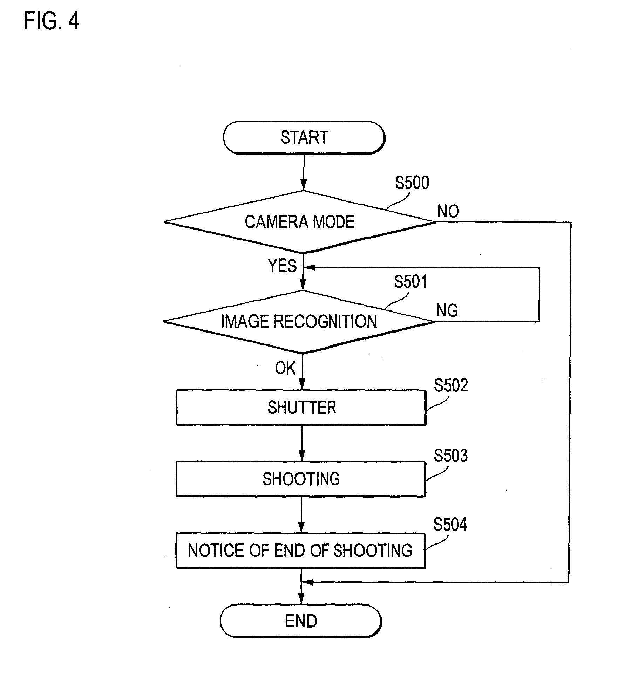

Now, a method for remote controlling the camera 9 of the mobile telephone with the camera according to the embodiment 2 will be described with reference to the construction shown in Fig. 2 and a flowchart shown in Fig. 4. First, when the mobile telephone is in a camera mode (S500: YES) and the image recognition unit 15 extracts the contour of the image on the camera 9 and displayed on the display unit 3 and the image comparison unit 17 confirms whether or not the pose of the subject is coincident with the image (such as V-sign) preliminarily registered in the image sample 16 of the control unit 5. When they are coincident (S501: OK), the camera control unit 13 operates the shutter of the camera 9 (S502) and performs a shooting (S503) according to a coincident signal. Considering the fact that a natural shooting is possible when there are several minutes from a time when the shooter (the subject to be shot) produces a pose to a time when the shutter is released, a time setting function may be given to the camera control unit 13. When the shooting is performed, the shooter is notified of the end of the shooting by a sound effect generated in the receiver 14 (S505) or the like. An image shot is displayed on the display unit 3 and is stored in the memory unit 4 by operating a predetermined key of the operation unit 1.

The pose, which is the shooting condition, can be arbitrarily selected from the samples preliminarily registered as the image samples in the image sample 16 by the user. Further, the user can newly register a preliminarily shot image as an image sample 16. Unlike the embodiment 1, the embodiment 2 has an advantage that the control of the camera 9 is not influenced even in noisy environment.

### Embodiment 3

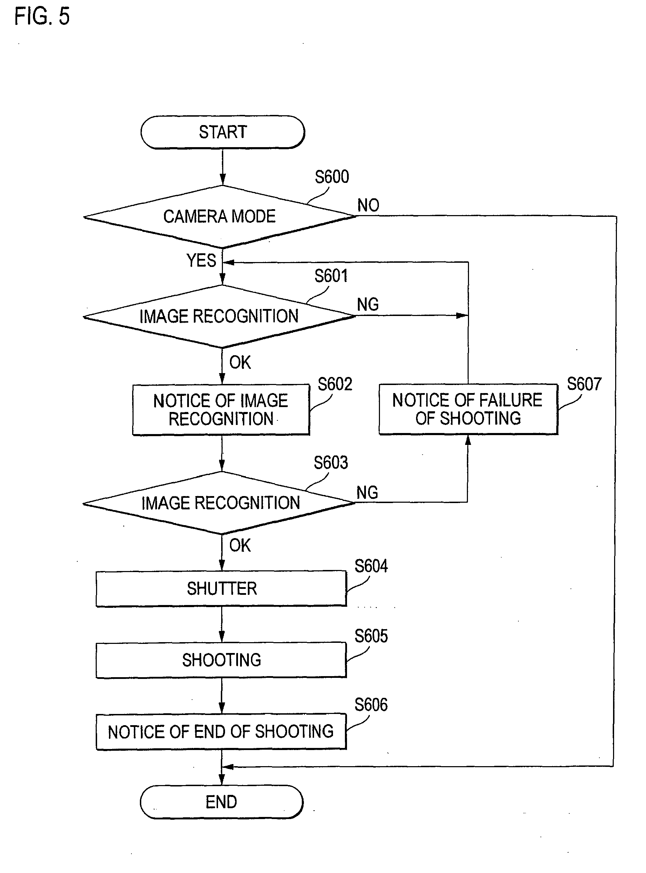

Fig. 5 is a flowchart of a main operation for explaining the embodiment 3 of the mobile telephone with the camera of the present invention. A construction of the mobile telephone with the camera of the embodiment 3 is similar to that of the embodiment 2 (Fig. 2). However, the embodiment 3 is featured in that an image sample in the image sample 16 is composed of at least two different poses, a first pose and a second pose, as a set and the movement of the shooter is detected on the basis of the continuous poses of the shooter.

The embodiment 3 will be described with reference to the construction shown in Fig. 2 and Fig. 5. First, when the mobile telephone is in a camera mode (S600: YES), the contour of the image on the camera 9 is extracted by the image recognition unit 15 and displayed on the display unit 3 and it is decided by the image comparison unit 17 whether or not the first pose of the shooter is coincident with the first pose of the two poses preliminarily registered in the image sample 16 of the control unit 5. When they are coincident (S601: YES), the shooter is notified of the recognition of the first image by generating a sound effect generated in the receiver 14 (S602) or the like. Thereafter, it is confirmed by the image comparison unit 17 whether or not the second pose of the shooter is coincident with the second pose of the two poses preliminarily registered in the image sample 16 of the control unit 5. When they are decided to be coincident (S603: YES), it is judged that the shooter did the registered movement and the image comparison unit 17 sends a signal indicating the decision to the camera control unit 13 and the camera control unit 13 operates the shutter of the camera 9 (S604) to perform a shooting (S605). When the shooting is over, the shooter is notified of the end of the shooting by a sound effect generated in the receiver 14 (S606) or the like. An image shot is displayed on the display unit 3 and stored in the memory unit 4 by operating a predetermined key of the operation unit 1.

The recognition of the movement of the shooter is performed by using 2 or more poses and a pose confirming interval between the poses is performed periodically (for example, every 1 second). When the number of poses is 3 or more, the above mentioned image recognition and the image comparison are repeated and, when the image comparison unit 17 confirms the coincidence therebetween to the last pose, a signal is outputted to the camera control unit 13, which operates the shutter of the camera 9 to thereby perform the shooting. When image comparison unit 17 decides that the second and succeeding poses of the subject are not coincident with the image samples in the image sample unit 16 (S603: NG), the shooter is notified of the failure of shooting by a different sound effect generated in the receiver 14 (S607) or the like and the operation of the mobile telephone with the camera returns to the state before the recognition of the first pose.

The image samples in the image sample 16, which are the shooting condition, are preliminarily registered and the user can select an arbitrary set of samples from the image sample 16. Further, when the camera can shoot moving image, it is possible to register a moving image preliminarily shot by the user in the image sample 16 as a new image sample by sampling the moving image every second, for example. Comparing with the embodiment 2, the embodiment 3 is possible to further lower the possibility that the shooting condition of the camera 9 is satisfied accidentally. Industrial Field of Application

According to the present invention, since the remote control of the camera function can be realized by only the mobile telephone with the camera, the camera function can be utilized widely.

## Claims

1. A mobile telephone with a camera, **characterized in that** a shutter of the camera (9) is automatically operated when the mobile telephone with the camera is in a camera mode and recognizes a preliminarily registered voice.

2. The mobile telephone with a camera, as claimed in claim 1, **characterized in that** the mobile telephone with a camera comprises a camera control unit (13), a voice recognition unit (10) for recognizing voice from a transmitter (8), a preliminarily registered voice sample (11), a voice comparison unit for comparing an output of the voice recognition unit (10) with one of the preliminarily registered voice samples (11), wherein, when the mobile telephone with the camera is in a camera mode, the voice comparison unit (12) detects a coincidence of the output of the voice recognition unit (10) and the voice sample (11) and outputs a signal for operating a shutter of the camera (9) to the camera control unit (13).

3. A mobile telephone with a camera, **characterized in that** a shutter of the camera (9) is automatically operated when the mobile telephone with the camera is in a camera mode and recognizes a preliminarily registered pose of a subject through the camera (9).

4. The mobile telephone with a camera as claimed in claim 3, **characterized in that** the mobile telephone with a camera comprises a camera control unit (13), an image recognition unit (15) for recognizing an image to be shot by the camera (9), a preliminarily registered image sample (16), and an image comparison unit (17) for comparing an output of the image recognition unit (15) with one of preliminarily registered image samples (16), wherein, when the mobile telephone with the camera is in a camera mode, the image comparison unit (17) detects a coincidence of the output of the image recognition unit (15) and the image sample (16) and outputs a signal for operating a shutter of the camera (9) to the camera control unit (13).

5. A mobile telephone with a camera, **characterized in that** a shutter of the camera (9) is automatically operated when the mobile telephone with the camera is in a camera mode and recognizes a preliminarily registered movement of a subject through the camera (9).

6. A mobile telephone with a camera as claimed in claim 5, **characterized in that** mobile telephone with a camera comprises a camera control unit (13), an image recognition unit (15) for recognizing an image to be shot by the camera (9), a preliminarily registered image sample (16), and an image comparison unit (17) for comparing an output of the image recognition unit (15) with continuous two image samples of the preliminarily registered image samples(16), wherein, when the mobile telephone with the camera is in a camera mode, the image comparison unit (17) detects a coincidence of the output of the image recognition unit (15) and the continuous image samples (16) and outputs a signal for operating a shutter of the camera (9) to the camera control unit (13).

7. The mobile telephone with a camera, as claimed in any one of claims 1 to 6, **characterized in that** the mobile telephone with a receiver (14) for notifying a shooting person of a successful operation of the shutter of the camera (9).

8. The mobile telephone with a camera, as claimed in any one of claims 1 to 6, **characterized in that** the mobile telephone with a camera further comprises a receiver (14) for notifying a shooting person of an unsuccessful operation of the shutter of the camera (9).

9. The mobile telephone with a camera, as claimed in any one of claims 1 to 6, **characterized in that** voice or image taken in from a transmitter unit (8) or the camera (9) can be registered as voice sample (11) or image sample (16).
